(19) **Europäisches Patentamt**
**European Patent Office**
**Office européen des brevets**

(11) **EP 1 573 724 B1**

(12) **EUROPEAN PATENT SPECIFICATION**

(45) Date of publication and mention
of the grant of the patent:
**14.02.2007 Bulletin 2007/07**

(51) Int Cl.:
**G11B 7/007** *(2006.01)*    **G11B 7/09** *(2006.01)*

(21) Application number: **03813208.0**

(22) Date of filing: **14.11.2003**

(86) International application number:
**PCT/IB2003/005226**

(87) International publication number:
**WO 2004/055792 (01.07.2004 Gazette 2004/27)**

(54) **OPTICAL RECORD CARRIERS**

OPTISCHE AUFZEICHNUNGSTRÄGER

SUPPORTS D'ENREGISTREMENT OPTIQUE

(84) Designated Contracting States:
**AT BE BG CH CY CZ DE DK EE ES FI FR GB GR HU IE IT LI LU MC NL PT RO SE SI SK TR**

(30) Priority: **13.12.2002 EP 02080326**

(43) Date of publication of application:
**14.09.2005 Bulletin 2005/37**

(73) Proprietor: **Koninklijke Philips Electronics N.V.**
**5621 BA  Eindhoven (NL)**

(72) Inventors:
• **MIJRITSKII, Andrei**
**NL-5656 AA Eindhoven (NL)**

• **BORG, Hermanus, J.**
**NL-5656 AA Eindhoven (NL)**

(74) Representative: **Uittenbogaard, Frank**
**Philips**
**Intellectual Property & Standards**
**P.O. Box 220**
**5600 AE  Eindhoven (NL)**

(56) References cited:
**EP-A- 0 545 713**          **EP-A- 1 205 923**
**US-A1- 2002 150 016**     **US-B1- 6 320 699**
**US-B1- 6 381 208**        **US-B1- 6 584 065**

**Description**

The present invention relates to optical record carriers, and is particularly, but not exclusively, suitable for correcting thickness variations present in optical discs.

Optical record carriers fall into one of several categories, including read only (readable, but not writeable), recordable (writeable one time only) and re-writeable (write, erasable, re-writeable). When the optical record carrier is an optical disc, each of the aforementioned types of optical record carrier undergoes a pre-forming manufacturing process that creates at least one track in the disc. For each type of disc, data is placed onto the track; the way in which data is so placed depends on the type of disc.

For example, read only optical discs are reproduced from master discs by a well known manufacturing process known as stamping. The, or each, data track includes a pit train comprising a plurality of pits which are spaced irregularly with respect to one another. Since the pit train constitutes pits of a different depth in the disc to the intervening lands in the disc, the pit trains form a relief structure in an information layer of the disc.

For recordable record carriers, the, or each, track is coated with a recordable layer, consisting of an organic dye. Data is written to the recordable layer by physically burning the organic dye with a radiation source, typically a laser, thereby creating marks therein.

For re-writable record carriers, the, or each, track is coated with a thin film layer stack, comprising at least one recording layer, a reflective layer and generally one or more dielectric layers. The recording layer comprises a compound made up of a plurality of materials, which is capable of existing in a plurality of different states (crystalline or amorphous), depending on the level of radiation applied thereto. Since crystalline and amorphous areas have a different reflectivity level, and reversible transitions between the amorphous and crystalline state are possible by applying laser power at various levels, writing and erasing of data is possible.

Recordable and re-writable discs can also include a relief structure that holds read-only data; such regions typically are in the lead-in zone and contain control information.

In conventional optical disc formats (like Magneto-Optical (MO) disc formats, Compact Disc (CD) and Digital Versatile Disc (DVD) the transparent layer is generally made by injection moulding the substrate; the disc is read out through the substrate. In other types of disc, such as the Blu-ray™ disc the transparent read-out layer is either formed by bonding a thin polycarbonate foil onto the substrate, or by a "spin coating" process, which involves applying lacquer to the surface of the information layer and rotating the disc. Centrifugal forces associated with rotation of the disc cause the lacquer to be distributed over the surface of the information layer, forming the transparent layer.

A problem with applying techniques such as spin coating is that there can be significant variations in the thickness of the transparent layer, in particular in the radial direction of the disc. As is well known in the art, the performance of an optical scanning device used to read the optical disc is sensitive to the presence of spherical aberrations in the spot that is focused on the information layer. Spherical aberrations arise in the spot when thickness variations arise in the discs which are uncompensated. Thus if the transparent layer falls outside of predetermined limits - due to an unexpectedly thick or thin region of the transparent layer - the distance to the information layer may correspondingly be less than or exceed that for which the optical scanning device is designed. This can result in an increase in spherical aberrations in the focused radiation source, and a deterioration of data signals and malfunctioning of the detection system used to detect signals encoded on the optical disc.

Several empirical methods have been developed for compensating for spherical aberrations introduced by the radiation passing through a transparent layer of different thicknesses. These methods are now described in more detail.

US 2002/0054554 describes a method whereby a test region of the optical disc is scanned, whilst the amplitude of the playback signal is measured. This test region comprises at least first and second pit trains, and the period of the first pit train differs from that of the second pit train. Due to the differences in periods, the amplitude of a playback signal corresponding to the first pit train differs from that of the playback signal corresponding to the second pit train. If the thickness of the transparent layer is uniform across the radius of the disc, the point at which the amplitude signals are focused - i.e. the point of maximum amplitude - can be expected to be the same for the two pit trains. However, if the thickness of the transparent layer varies across the radius of the disc, the point at which the maximum signal corresponding to the first pit train occurs differs from the point at which the maximum signal corresponding to the second pit train occurs. Thus the difference between the points at which maximum signal amplitude corresponding to the respective pit trains occurs can be used to identify a thickness variation. A problem with this solution is that the test regions have to be analyzed for each disc whenever input into a scanning device, and thickness data for regions outside the 5 test regions have to be assumed or interpolated. If a plurality of test regions were analyzed (for example, in order to identify non-linear thickness variations across the disc), this would be a time consuming process. Furthermore, the test regions take up space on the disc which could otherwise provide useful data capacity.

US 6,381,208 describes a method whereby data relating to the thickness and refractive index of the transparent layer is measured after the disc has been manufactured. This thickness data is thereafter written on the optical disc, on a writable portion of the information layer. When such a disc is then scanned by an optical scanning device, the thickness data is read and is used to modify the position of lenses thereof, effectively compensating for spherical aberrations associated with the thickness variations. The data is stored in the form of average thickness and unevenness in thickness at various distances along the radius of the disc, and the optical scanning device is arranged to access a look-up table detailing lens configuration as a function of thickness. Thus once the scanning device has read in the thickness and refractive index information stored on the disc, lens configuration data corresponding thereto can be retrieved from the look-up table.

A problem with this method is that, since the thickness profile has to be measured on a per-disc basis, and written into each disc, this presents an additional manufacturing overhead.

JP2001167443 also describes a system where thickness information is measured and written to a disc as a manufacturing stage, thus increasing manufacturing costs.

EP0545713A1, which is used for the two-part form delimitation, discloses a system using an optical record carrier in which data on the thickness of the transparent layer is provided in a data means on the radiation incident surface of the disc. Actual disk thickness information may be, after testing to the individual disc at manufacture, impressed in the data means. This data is read from the data means on the disc surface using a separate data reader means.

It is an object of the invention to alleviate the problems of the prior art arrangements.

According to a first aspect of the present invention there is provided an optical record carrier for use in an optical scanning device, the optical record carrier comprising an entrance face, an information layer and at least one transparent layer, located between the entrance face and the information layer, through which data is to be read from the information layer, wherein the information layer includes a relief structure holding data in embossed form, wherein the data held in the relief structure includes thickness variation data indicative of a variation in the thickness of the optical record carrier between the entrance face and the information layer, due to a variation in the thickness of the at least one transparent layer.

Embodiments of the present invention have arisen from the realization that thickness profiles created during manufacturing processes used to create the transparent layer are reproducible and can be characterized. Having arrived at this realization, the inventors have taken a second step and encoded this information in a read-only portion of a disc. In other words, information about the thickness profile of a layer has been stored to the disc before that layer has even been created on the disc.

All of the prior art discussed above describe measuring the thickness of the transparent layer after manufacture, which means that thickness information has to be written post manufacture, and thus to the writeable portions of a disc. In comparison to such known methods, in embodiments of the present invention, thickness information is stored in a relief structure, formed during a stamping process, which holds read-only data. Thus, no additional manufacturing stage is required, and a disc need not include a writable portion.

Providing a disc manufacturer can characterize its transparent layer manufacturing process, for example as a thickness profile, the profile can be stamped onto the discs before the spin coating process is applied, and read therefrom in accordance with embodiments of the invention, as described in more detail below. This is clearly advantageous, since it means that embodiments of the invention can be applied to any type of disc which has a read-only portion, providing the manufacturer stamps information relating to the thickness variation in such a portion.

For a well-defmed manufacture process, for example a spin-coating process for forming a transparent layer using a specified disc rotation speed and a given lacquer formulation, coarse variations in thickness of the transparent layer can be known in advance, and will not vary from disc to disc. The quality of the transparent layer (i.e. the degree of variation of thickness) is no longer as problematic. This is clearly an advantage in terms of manufacturing costs, since less rigorous, and thus less costly, spin coating processes can be used.

Further aspects of the invention are set out in the appended claims, and features and advantages of the present invention will become apparent from the following description of preferred embodiments of the invention, which is given by way of example only and made with reference to the accompanying drawings.

Fig. 1 is a schematic diagram showing an optical scanning device operating in conjunction with a record carrier according to an embodiment of the present invention;

Fig. 2 is a schematic cross section along a data track in a lead-in zone of an optical disc in accordance with an embodiment of the invention;

Fig. 3 is a schematic radial cross section of a lead-in zone of an optical disc in accordance with a further embodiment of the invention;

Fig. 4 is a schematic diagram showing a graphical representation of a radial thickness profile of the transparent layer;

Fig. 5 is a flow diagram showing steps performed by an optical scanning device according to embodiments of the present invention; and

Figs. 6 and 7 are flow diagrams showing steps performed by an optical scanning device according to alternative embodiments of the present invention.

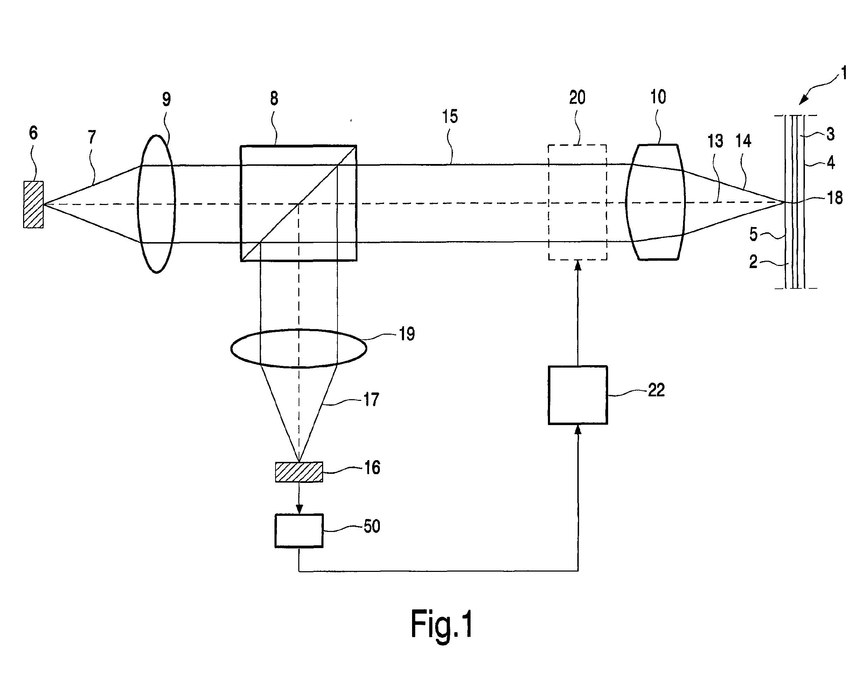

Fig. 1 shows a schematic diagram of an optical scanning device with which optical discs according to embodiments of the present invention are arranged to operate. The optical scanning device includes a radiation source 6, for example a semi-conductor laser, emitting a diverging radiation beam 7. A beam splitter 8, for example a semi-transparent plate, is arranged to transmit the diverging beam 7 towards a lens system. The lens system includes a collimator lens 9 and an objective lens 10 arranged along an optical axis 13.

The collimator lens 9 is arranged to transform the diverging beam 7 emitted from the radiation source 6 into a substantially collimated beam 15. The objective lens 10 is arranged to transform the incident collimated radiation beam 15 into a converging beam 14, having a selected numerical aperture (NA), which comes to a spot 18 on a layer of optical disc 1 (specifically information layer 3, described in more detail below). A detection system 16 and a second collimator lens 19, together with the beam splitter 8, are provided to detect a main information signal and focus and tracking error signals, which are used to mechanically adjust the axial and radial position of the objective lens 10.

The optical system also includes a spherical aberration compensator 20 which is operated by a compensation signal generator 22. The compensator 20 may take any of a number of different forms, for example a variable focus liquid crystal lens. In alternative embodiments, the compensator is arranged to adjust the spacing between two lenses of a compound objective lens 10, or to adjust the spacing between the collimator lens 9 and the radiation source 6.

Optical disc 1 comprises a transparent layer 2, on one side of which at least one information layer 3 is arranged and having the entrance face 5 of the disc on its other side. The information layer 3 includes a reflective layer (not shown). The side of the information layer facing away from the transparent layer is protected from environmental influences by a protection layer 4. The transparent layer 2 acts as a substrate for the optical disc by providing mechanical support for the information and reflective layer or layers. Alternatively, the transparent layer 2 may have the sole function of protecting the information layer 3, which, in the case of a multi-layer optical disc, is the uppermost information layer, while mechanical support is provided by a layer on the other side of the information layer 3, for instance by the protection layer 4 or by a further information layer and transparent layer connected to the uppermost information layer. In the case of a multi-layer optical disc, two or more information layers are arranged behind a first transparent layer, and an information layer is separated from another information layer by a further transparent layer. Each information layer is located at a different depth within the disc with respect to the entrance face 5.

The transparent layer 2 essentially presents a refractive medium for the converging beam 14 to pass through. As stated above, a problem with the spin coating process used to create the transparent layer 2 is that there can be significant variations in the thickness of the layer 2, such that distance between the information layer 3 and the entrance face 5 varies across the disc. If the thickness of the layer 2 is non-uniform in the radial direction, the degree of spherical aberration in the spot 18 at various points along the radius will vary. As a result both data and control signals can be expected to be poor at certain radial locations.

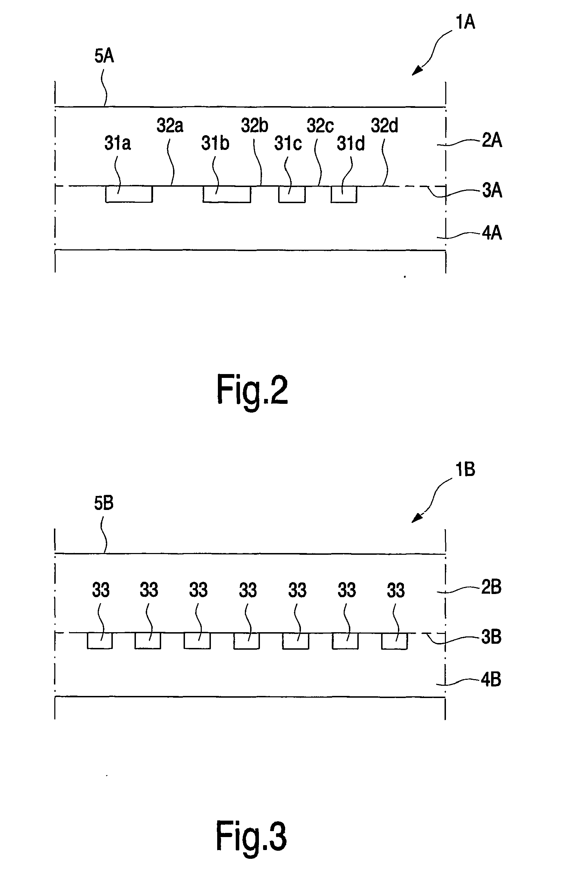

Fig. 2 shows a cross-section through a part of a data track in the lead-in zone of a first embodiment of optical disc 1A. The lead-in zone includes control data for initializing the scanning device when the disc 1 is inserted into the device, and is located at the innermost periphery of the readable portion of the disc 1. The disc 1A includes a relief structure in the form of a series of pits 31a, 31b, 31c, 31d, of various lengths and spacings alternately interposed between a series of lands 32a, 32b, 32c... 32d along the data track. The relief structure holds read-only data. The data track may itself be spiral or circular in form. The relief structure holding the data is formed by a stamping injection moulding process from a master having a corresponding pattern on its face.

Fig. 3 illustrates a different format of lead-in zone, used in a different embodiment of optical disc 1B, which is shown in radial cross-section in this case. In this format, the lead-in zone includes a relief structure in the form of a land/groove structure. The, or each, groove forms a spiral or circular track. In this embodiment, data is held in the land/groove structure in the form of a high frequency modulated wobble pattern, whereby the groove alternately meanders slightly to each side from its overall path in accordance with read-only data held in the wobble pattern. Again, the relief structure holding the data is formed by a master having a corresponding pattern on its face.

For the purposes of the following embodiments it is assumed that the disc 1 (having a lead-in zone of a form as shown in either Fig. 2 or Fig. 3) is of a read-only type, but it should be appreciated that embodiments of the invention can be realized in a recordable disc having at least one read-only portion, for example in the lead-in zone.

In all of the embodiments described herein, a thickness profile - that is to say, the way in which the thickness of the transparent layer 2 at least coarsely varies with radial location - is characterized in advance of its manufacture. This information is stamped onto the lead-in zone of the optical disc 1 at the time of manufacture. The information layer 3 can thus include data in respect of a layer, which, at the time of stamping the disc (and thus creating the information layer) has not yet been created. The process applied to create the subsequently applied layer is reproducible and the layer has certain characterizable generic features. A disc manufacturer can characterize its spin coating process as a thickness profile, data identifying the profile can be stamped onto the discs before the spin coating process is conducted, and read therefrom thereafter when the discs are scanned, during playback or writing, in accordance with embodiments of the invention, as described in more detail below. This is advantageous, since it means that embodiments of the invention can be applied, en-masse, to any type of disc that has a read-only portion, by stamping the thickness profile data in such portions.

Different formats of the thickness profile data are possible. In one embodiment the data includes values which describe thickness deviations at selected radial positions along the optical disc 1. The number of positions, and the corresponding number of different possible thickness deviations specified, is preferably at least three, more preferably at least five, and yet more preferably ten or more.

The profile data may comprise absolute or relative values describing the thickness of the layer at radial positions along the optical disc 1. When the data are absolute values, they are preferably converted to relative values. This involves selecting one radial position as the reference position, and calculating the thicknesses at the other locations relative to the thickness at the reference position.

In one arrangement, the profile data comprise a set of values, such as those shown in Table 1, specifying deviations, given in arbitrary units, corresponding to amounts of thickness variation at selected radii.

Table 1

| radius R [mm] | deviation D |
| --- | --- |
| 23 | -1 |
| 27 | +2 |
| 31 | +5 |
| 35 | +3 |
| 39 | +3 |
| 43 | +2 |
| 47 | +3 |
| 51 | +1 |
| 55 | -1 |
| 59 | -3 |

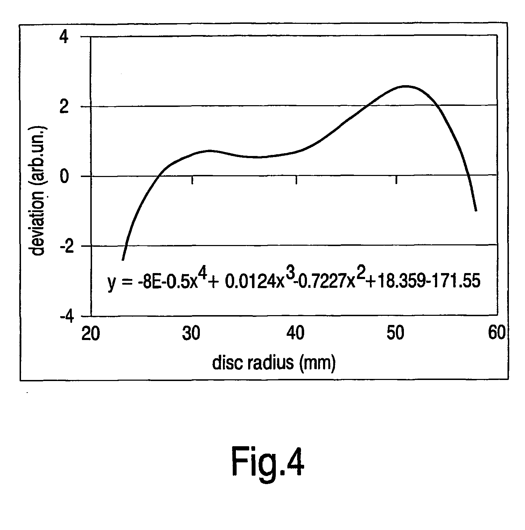

In an alternative embodiment, the profile data specifies a function that describes the variation of deviation with distance from a reference position. For example, the profile data on the optical disc may describe a constant and coefficients of a predetermined polynomial function. For example, if the function is the polynomial $y = -8E(-05)x^4 + 0.0124x^3 - 0.7227x^2 + 18.359x - 171.55$, such as that shown in Figure 4, coefficients -8.5E(-0.5), 0.0124, -0.7227, 18.359 may be stored, together with the degree of polynomial (here 4) and a constant, if any (here 171.55).

Aspects of the spherical aberration compensation subsystem will now be described in more detail. As shown in Figure 1, the subsystem includes a control unit 51 arranged to read in thickness profile data stored in the lead-in zone. The control unit 51 is also arranged to process the data so read, and to output control data corresponding thereto to the compensation signal generator 22. The output data is used by the signal generator 22 to generate a signal causing the compensator 20 to add an amount of spherical aberration compensation to the beam corresponding to the thickness of the transparent layer 2 at the radial position currently being scanned. The control unit 51 preferably runs a computer program, or part of a suite of computer programs that cooperates with processing circuitry of the detection system 16.

The steps involved in evaluating the compensation signal required to account for thickness variations will now be described, with reference to Figures 4, 5 and 6.

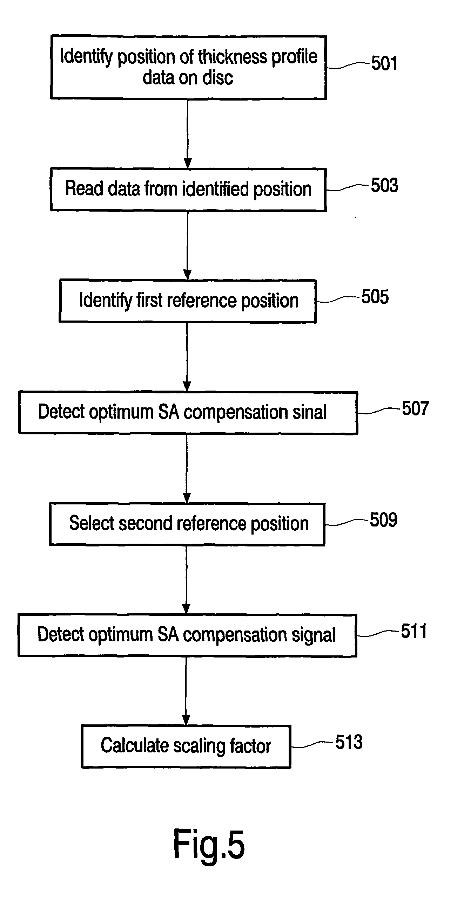

Referring firstly to Figure 5, at step 501 the control unit 51 identifies the position of the thickness data on the information layer 3. In the present embodiment, the data is stored in the lead-in zone, so step 501 involves the control unit 51 instructing the scanning device to read in data stored in the lead-in zone. The detection system 16 reads at step 503 data from the identified area and passes this data to the control unit 51, which stores it as a data file.

Next, the control unit 51 identifies at step 503 a first reference position. The first reference position may be a predetermined position, either stored in the scanning device or read from the thickness profile data stored in the lead-in zone, or may be selected after analysis of the thickness profile data. When selected after analysis of the thickness profile data, the first reference position is preferably selected to be a radial position having a thickness value near or at one end of the range of the thickness values. The same applies to a second reference position, to be described in further detail below, which may be either predetermined or selected after analysis of the thickness data. If selected after analysis of the thickness profile data, the second reference position is preferably a position having a thickness value near or at the other end of the range of thickness values. In any case, the first and second reference positions should have different thickness values, so that a scaling factor relating the thickness deviation (in arbitrary units) to the corresponding compensation signal may be calculated after testing of the optical disc in the scanning device.

Next, at step 507, the scanning device conducts a test procedure at the first reference position on the disc to determine an optimum spherical aberration (SA) compensation signal. In the case of a read-only disc, this is in one embodiment conducted by reading data at a selected radial position with a variety of different spherical aberration compensation settings whilst detecting a jitter value in the main information signal, and optimizing the setting to a minimum jitter value. In the case of a writable disc, data may be written into the disc at the reference position using a standard spherical aberration compensation setting to begin with, following which optimization of the spherical aberration compensation setting is carried out whilst reading the data back. Once an optimum setting for a reading is obtained, the data may be re-written using the optimum setting obtained for a reading, and the optimization procedure may be carried out once more using the newly-written data, since the data which is written first using the standard setting may not be optimized itself, leading to errors in the optimization procedure.

Optimizing the SA compensation signal can be carried out using alternative methods; for example a push-pull tracking error signal can be used; in this case an optimum is determined at the setting at which the envelope of the tracking error signal has the greatest amplitude during read-out. By using the tracking error signal, an optimum SA compensation signal can be detected in a blank part of the disc, thus the need for writing data to a writable disc during the test procedure can be avoided. At the optimized SA compensation setting, the signal applied by the signal generator 22 is noted. Next, the optical scanning device moves the optical head to the second reference position, step 509, and detects and stores an optimum spherical aberration compensation signal, step 511, in a similar manner.

Next, the control unit calculates a scaling factor, according to the following expression:

$$ \text{SF} = [I(R_{ref1}) - I(R_{ref2})]/[D(R_{ref1}) - D(R_{ref2})] \qquad \underline{\text{Formula 1}} $$

Where SF is the scaling factor for the disc; $R_{ref1}$ is the radius at the first reference position and $R_{ref2}$ is the radius at the second reference position; I is the current to be applied at radius $R_i$ and D is the deviation at radius $R_i$.

This scaling factor is then stored for use by the spherical aberration compensation subsystem, in combination with the thickness deviation data, when scanning the optical disc at any radial location.

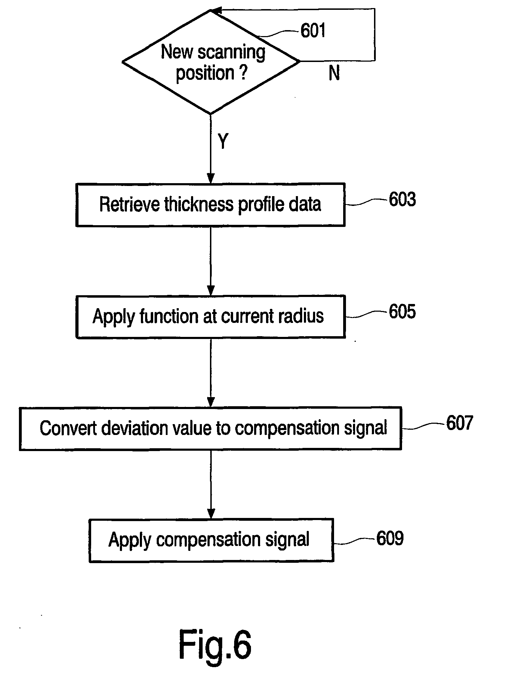

Referring now to Fig. 6, which illustrates a spherical aberration compensation procedure when the thickness profile data is held in the form of parameters of a thickness profile function, the control unit 51 first detects whether the optical head has been moved to a new scanning position, step 601. If the optical head is in a new scanning position, the control unit 51 retrieves the thickness profile data, step 603, and applies the function corresponding to the thickness profile data to calculate the thickness deviation at the current radius, step 605. The control unit 51 then converts the deviation value to a compensation signal value by applying the previously-calculated scale factor, step 607, and instructs the signal generator 22 to apply the appropriate compensation signal at step 609 to the compensator 20.

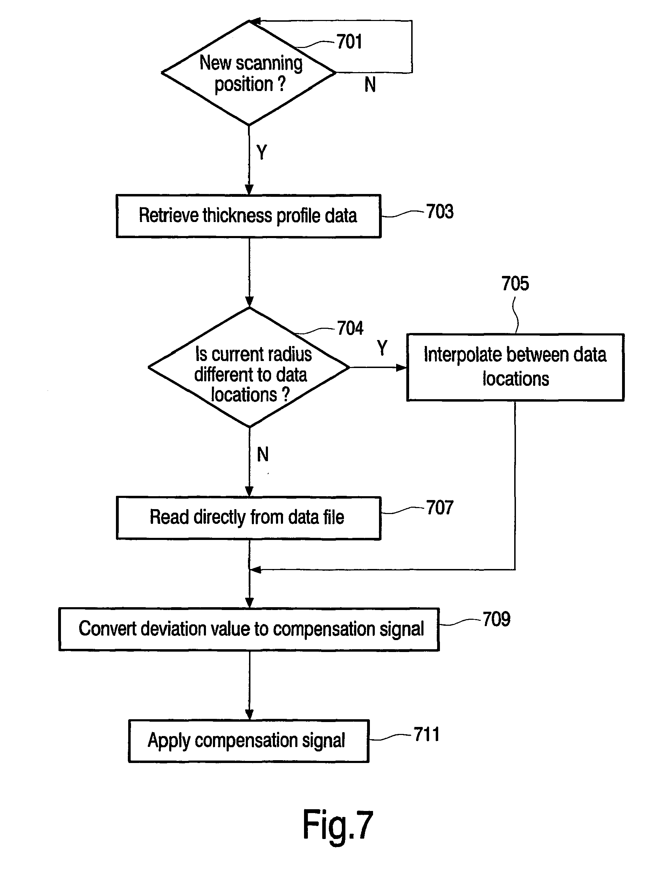

Fig. 7 illustrates a corresponding procedure when the thickness profile data is stored as a set of values for each of a plurality of selected radial locations.

Referring now to Fig. 7, during a scanning operation, which in the case of a read-only disc may be a read operation, and in the case of a recordable or rewritable disc may be a read operation or a write operation, the control unit 51 detects whether the optical head has been moved to a new scanning position in step 701. If the head is moved to a new scanning position, the control unit 51 retrieves the thickness profile data at step 703, and detects whether the current radius is different to the locations at which thickness deviation data is available in the data file, step 704. If so, the current thickness deviation is read from the data file, step 707. If the current radius is different to one of the locations available in the data file, interpolation of the deviation is carried out between the two adjacent locations in the data file, to calculate a current expected thickness deviation at the current radius, step 705. With the read or calculated deviation, the deviation value is converted by the control unit to a compensation signal value, step 709, which is supplied to the signal generator 22, which applies the appropriate compensation signal to the compensator 20, step 711.

In a further embodiment of the invention a multi-layer optical disc, comprising at least first and second information layers and corresponding first and second transparent layers is provided. There are thus at least two transparent layers, each of which have been applied to their respective information layers via spin coating, and which may have a corresponding thickness variation. In this embodiment one or more read-only portions of the dual layer optical disc includes two sets of thickness profile data - one for the first transparent layer and one for the second transparent layer. Variations in thickness of each of the transparent layers are specified and the control unit 51 calculates corresponding current scale factors for each layer, as described above, and, for each of the information layers calculates the adjustment required along the radius of the disc when scanning either of the two information layers.

In the above embodiments, a test procedure is used to determine a suitable set of optimal spherical aberration compensation settings corresponding to given set of different thicknesses. Alternatively, such settings may be determined by look-up from a table prestored in the optical scanning device.

In the above description, and in the accompanying claims, the term "relief structure" has been used to describe a structure in, or following, a surface having height variations. Such height variations can also be referred to in the art as embossments and occur due to corresponding height variations in a master used during a stamping procedure. Such a relief structure may include a pit/land train, a wobble pattern in a groove, a combination of such features, and/or other features provided by height variations stamped onto a surface. In accordance with the invention, a relief structure holds data including thickness variation data. In preferred embodiments, the thickness variation data indicates variations which are correspond in proportion to the thickness variations in the layer or layer of which the thickness profile is being described. However, the invention extends to variations, which are due to at least two parameters including a thickness parameter and another parameter such as refractive index variations, which cause a need for spherical aberration correction. Thus, the thickness variation data may not directly indicate a given thickness variation if other variations leading to a need for spherical aberration correction are to be taken into account. However, any such other variation should be characterizable in advance of production of the layer in question. Typically, other variations are not characterizable in advance and/or cause only relatively minor spherical aberration problems, and the thickness variation data may be limited to solely being indicative of thickness variations.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An optical record carrier (1) for use in an optical scanning device, the optical record carrier comprising an entrance face (5), an information layer (3) and at least one transparent layer (2), located between the entrance face and the information layer, through which data is to be read from the information layer, wherein the information layer includes a relief structure (31a, 31b, 31c, 31d; 32a, 32b, 32c, 32d; 33) holding data in embossed form, **characterized in that** the data held in the relief structure includes thickness variation data indicative of a variation in the thickness of the optical record carrier between the entrance face and the information layer, due to a variation in the thickness of the at least one transparent layer.

2. An optical record carrier according to claim 1, wherein said data held in the relief structure includes data indicating a thickness profile in terms of a set of thickness data, each item in the set being indicative of a thickness deviation at a different one of a plurality of locations across the entrance face.

3. An optical record carrier according to claim 1, wherein said data held in the relief structure includes data indicating a thickness profile comprising a set of thickness function parameters which, when combined using a predetermined algorithm, provide a function indicative of a thickness profile across the entrance face.

4. An optical record carrier according to any one of the preceding claims, wherein said relief structure comprises a pit/land structure (31a, 31b, 31c, 31d; 32a, 32b, 32c, 32d) holding the thickness variation data.

5. An optical record carrier according to any of claims 1 to 3, wherein said relief structure comprises a groove structure (33) having a wobble pattern holding the thickness variation data.

6. An optical record carrier according to any one of the preceding claims, wherein the record carrier is in the form of a disc, and the thickness variation data indicates a radial thickness profile.

7. A method of manufacturing an optical record carrier (1) for use in an optical scanning device, the optical record carrier comprising an entrance face (5), an information layer (3) and at least one transparent layer (2), located between the entrance face and the information layer, through which data is to be read from the information layer, wherein the method comprises the step of stamping at least part of the information layer to include a relief structure (31a, 31b, 31c, 31d; 32a, 32b, 32c, 32d; 33) holding data in embossed form, and subsequently forming the transparent layer,

**characterized in that** the data held in the relief structure includes thickness variation data indicative of a variation in the thickness of the optical record carrier between the entrance face and the information layer, due to a variation in the thickness of the at least one transparent layer.

8. A method according to claim 7, wherein the method comprises forming the transparent layer by spin coating.

**Patentansprüche**

1. Optischer Aufzeichnungträger (1) zur Verwendung in einer optischen Abtasteinrichtung, der eine Eintrittsfläche (5), eine Informationsschicht (3) und mindestens eine zwischen der Eintrittsfläche und der Informationsschicht befindliche transparente Schicht (2), durch die hindurch Daten von der Informationsschicht gelesen werden sollen, umfasst, wobei die Informationsschicht eine Reliefstruktur (31a, 31b, 31c, 31d; 32a, 32b, 32c, 32d; 33) aufweist, die Daten in aufgeprägter Form enthält, **dadurch gekennzeichnet, dass** die in der Reliefstruktur enthaltenen Daten Dickenschwankungsdaten einschließen, die eine Schwankung der Dicke des optischen Aufzeichnungsträgers zwischen der Eintrittsfläche und der Informationsschicht angeben, die auf eine Schwankung der Dicke der mindestens einen transparenten Schicht zurückzuführen ist.

2. Optischer Aufzeichnungsträger nach Anspruch 1, bei dem die Daten, die in der Reliefstruktur enthalten sind, Daten einschließen, die ein Dickenprofil in Form eines Satzes von Dickendaten angeben, wobei jede Größe in dem Satz eine Dickenabweichung an einer anderen von einer Vielzahl von Positionen quer über die Eintrittsfläche angibt.

3. Optischer Aufzeichnungsträger nach Anspruch 1, bei dem die Daten, die in der Reliefstruktur enthalten sind, Daten einschließen, die ein Dickenprofil angeben, umfassend einen Satz von Dickenfunktionsparametern, die, wenn sie unter Verwendung eines vorgegebenen Algorithmus kombiniert werden, eine Funktion liefern, die ein Dickenprofil quer über die Eintrittsfläche angibt.

4. Optischer Aufzeichnungsträger nach einem der vorhergehenden Ansprüche, bei dem die Reliefstruktur eine Vertiefungs-/Zwischenraum-Struktur (31 a, 31 b, 31c, 3 1 d; 32a, 32b, 32c, 32d) umfasst, die die Dickenschwankungsdaten hält.

5. Optischer Aufzeichnungsträger nach einem der Ansprüche 1 bis 3, bei dem die Reliefstruktur eine Rillenstruktur (33) mit einem Wobbelmuster umfasst, das die Dickenschwankungsdaten hält.

6. Optischer Aufzeichnungsträger nach einem der vorhergehenden Ansprüche, wobei der Aufzeichnungsträger in der Form einer Platte ist und die Dickenschwankungsdaten ein radiales Dickenprofil angeben.

7. Verfahren zum Herstellen eines optischen Aufzeichnungsträgers (1) zur Verwendung in einer optischen Abtasteinrichtung, wobei der optische Aufzeichnungsträger eine Eintrittsfläche (5), eine Informationsschicht (3) und mindestens eine zwischen der Eintrittsfläche und der Informationsschicht befindliche transparente Schicht (2), durch die hindurch Daten von der Informationsschicht gelesen werden sollen, umfasst, wobei das Verfahren den Schritt des Prägens mindestens eines Teils der Informationsschicht - sodass diese eine Reliefstruktur (31a, 31b, 31c, 31d; 32a, 32b, 32c, 32d; 33) aufweist, welche Daten in aufgeprägter Form enthält - und anschließend des Bildens der transparenten Schicht umfasst, **dadurch gekennzeichnet, dass** die Daten, die in der Reliefstruktur enthalten sind, Dickenschwankungsdaten einschließen, die eine Schwankung der Dicke des optischen Aufzeichnungsträgers zwischen der Eintrittsfläche und der Informationsschicht angeben, die auf eine Schwankung der Dicke der mindestens einen transparenten Schicht zurückzuführen ist.

8. Verfahren nach Anspruch 7, wobei das Verfahren das Bilden der transparenten Schicht durch Schleuderbeschichten umfasst.

**Revendications**

1. Support d'enregistrement optique (1) pour un usage dans un dispositif de balayage optique, le support d'enregistrement optique comprenant une face d'entrée (5), une couche d'informations (3) et au moins une couche transparente (2), située entre la face d'entrée et la couche d'informations, au travers de laquelle des données doivent être lues à partir de la couche d'informations, dans lequel la couche d'informations comprend une structure en relief (31a, 31b, 31c, 31d ; 32a, 32b, 32c, 32d ; 33) retenant des données sous forme estampillée, **caractérisé en ce que** les données sont retenues dans la structure en relief comprennent les données de variation d'épaisseur indicatives d'une variation de l'épaisseur du support d'enregistrement optique entre la face d'entrée et la couche d'informations, à cause d'une variation de l'épaisseur de au moins une couche transparente.

2. Support d'enregistrement optique selon la revendication 1, dans lequel lesdites données retenues dans la structure en relief comprennent des données indiquant un profil d'épaisseur en termes d'un ensemble de données d'épaisseur, chaque item dans l'ensemble étant indicatif d'une déviation d'épaisseur à une ou plusieurs positions différentes au travers de la face d'entrée.

3. Support d'enregistrement optique selon la revendication 1, dans lequel lesdites données retenues dans la structure en relief comprennent des données indiquant un profil d'épaisseur comprenant un ensemble de paramètres de fonction d'épaisseur qui, lorsque combinés en utilisant un algorithme prédéterminé, fournit une fonction indicative du profil d'épaisseur au travers de la face d'entrée.

4. Support d'enregistrement optique selon une quelconque des revendications précédentes, dans lequel ladite structure en relief comprend une structure en creux et plats (31a, 31b, 31c, 31d ; 32a, 32b, 32c, 32d) retenant les données de variation d'épaisseur.

5. Support d'enregistrement optique selon une quelconque des revendications 1 à 3, dans lequel la dite structure en relief comprend une structure en rainure (33) ayant une forme en oscillation retenant les données de variation d'épaisseur.

6. Support d'enregistrement optique selon une quelconque des revendications précédentes, dans lequel le support d'enregistrement est sous la forme d'un disque, et les données de variation d'épaisseur indiquent un profil radial d'épaisseur.

7. Procédé de fabrication d'un support d'enregistrement optique (1) pour un usage dans un dispositif de balayage optique, le support d'enregistrement optique comprenant une face d'entrée (5), une couche d'informations (3) et au moins une couche transparente (2), située entre la face d'entrée et la couche d'informations, au travers de laquelle des données doivent être lues à partir de la couche d'informations, dans lequel le procédé comprend l'étape d'estampillage d'au moins une partie de la couche d'informations pour inclure une structure en relief (31a, 31b, 31c, 31d ; 32a, 32b, 32c, 32d ; 33) retenant des données sous forme estampillée, et subséquemment formant la couche transparente, **caractérisé en ce que** les données retenues dans la structure en relief comprennent les données de variation d'épaisseur indicatives d'une variation de l'épaisseur du support d'enregistrement optique entre la face d'entrée et la couche d'informations, à cause d'une variation de l'épaisseur de au moins une couche transparente.

8. Procédé selon la revendication 7, dans lequel le procédé comprend la formation d'une couche transparente par dépôt à la tournette.

Fig.1

1A

5A

31a    32a    31b    32b    31c    32c    31d    32d

2A

3A

4A

**Fig.2**

1B

5B

33    33    33    33    33    33    33

2B

3B

4B

**Fig.3**

Fig.4

Identify position of thickness profile data on disc ⌐501

Read data from identified position ⌐503

Identify first reference position ⌐505

Detect optimum SA compensation sinal ⌐507

Select second reference position ⌐509

Detect optimum SA compensation signal ⌐511

Calculate scaling factor ⌐513

# Fig.5

New scanning
position ?          —601
                    N

Y

Retrieve thickness profile data          —603

Apply function at current radius          —605

Convert deviation value to compensation signal          —607

Apply compensation signal          —609

# Fig.6

New scanning position ? —701

N

Y

Retrieve thickness profile data —703

705

Is current radius different to data locations ? —704

Y

Interpolate between data locations

N

Read directly from data file —707

Convert deviation value to compensation signal —709

Apply compensation signal —711

Fig.7